# EUROPEAN PATENT APPLICATION

(11) **EP 4 651 306 A1**
(43) Date of publication of application: **19.11.2025**
(21) Application number: 25176245.6
(22) Date of filing: 14.05.2025
(51) Int. Cl.: H01R 4/30, H01R 4/70, H01R 13/44, B60R 16/00, H01M 50/50

(54) **MOUNTABLE TOUCH PROTECTION COVER, INTERFACE, AND MODULE CONNECTOR**

(30) Priority: 16.05.2024 DE 102024113765
(71) Applicant: TE Connectivity Solutions GmbH, 8200 Schaffhausen (CH)
(72) Inventor: EHEIM, Manuel, 8200 Schaffhausen (CH); STINE, Adrian, 8200 Schaffhausen (CH); HOFFMANN, Bjoern, 8200 Schaffhausen (CH); DISTLER, Patrick, 8200 Schaffhausen (CH); WOLF, Marcus, 8200 Schaffhausen (CH); BUCHHOLZ, Ron, 8200 Schaffhausen (CH); KAEHNY, Frank, 8200 Schaffhausen (CH)
(74) Representative: Grünecker Patent- und Rechtsanwälte PartG mbB

(57) **Abstract**

The invention relates to a touch protection cover (1) for a connection member (14a) of a module connector (2), wherein the touch protection cover (1) comprises a housing section (16) which forms a protective collar (18) for the connection member (14a), a contacting chamber (26) which is surrounded by the protective collar (18) and which is configured to receive the connection member (14a), and a positioning section (58) which extends within the contacting chamber (26), wherein the positioning section (58) comprises at least one support surface (60) which is offset from the protective collar (18) and faces inwardly with respect to the contacting chamber (26) and which is configured to abut against the connection member (14a). The positioning section (58) allows the connection member (14a) to be used as a reference point when attaching the touch protection cover (1). This makes positioning more precise and the protective collar (18) can reliably fulfill its touch protection function. The present invention also relates to an interface (4) with such a touch protection cover (1) and an electrically conductive connection member (14a) as well as a module connector (2) with the interface (4) and a mating member (6).

## Description

The invention relates to an electrically insulating touch protection cover for a connection member of an electrical module connector. The present invention furthermore relates to an interface with such a touch protection cover and an electrically conductive connection member. The present invention additionally relates to a module connector with an interface and a mating member complementary thereto.

Module connectors are used in battery systems and other energy systems to connect different electrical modules to one another using current conductors connected by way of connection members. The modules can be battery modules, control units, or current transformers or busbars, respectively. Such modules often operate with high voltages and/or currents that are dangerous for a user, for example, for a mechanic in a workshop.

For this reason, touch protection, which covers the respective current conductors and/or connection members of the module connector, is provided, in particular in places that the user could be expected to approach. This covering may only impede accessibility for the user, but not impair accessibility for the complementary mating member of the interface, because otherwise the module connector cannot perform its function.

Mounting and attaching the touch protection to the connection members is an important step there, the proper and precise implementation of which can minimize the risk to users of the module connector.

The object of the invention is therefore to provide a device that increase the electrical safety of module connectors and reduce their manufacturing costs.

According to the invention, this is achieved by an electrically insulating touch protection cover for a connection member of an electrical module connector comprising a fastening element, wherein the touch protection cover comprises a housing section which forms a protective collar for the connection member, a contacting chamber which is surrounded at least in part by the protective collar and which is configured to receive the connection member at least in part, and a positioning section for positioning the connection member relative to the protective collar, wherein the positioning section extends at least in part within the contacting chamber and comprises at least one support surface which is offset from the protective collar and faces inwardly with respect to the contacting chamber.

Here, the connection member is an electrically conductive component that is attached onto a current conductor and, together with the touch protection cover, forms an interface of the module connector. Furthermore, the support surface offset from the protective collar is a surface that stands out clearly from the protective collar. The positioning section can represent a single continuous section or multiple partial sections that are spaced from one another.

The solution according to the invention is advantageous because the positioning section allows the connection member itself, i.e. the component to be covered, to be used directly as a reference point for positioning the touch protection cover when mounting or attaching the touch protection cover. This prevents incorrect positioning and subsequent displacement of the touch protection cover so that the protective collar can fully and reliably fulfill its touch protection function. A module connector with such a touch protection cover therefore exhibits increased electrical safety and is cheaper to manufacture due to less waste.

For example, the touch protection cover can be mounted together with its contacting chamber onto the connection member. Once the connection member has been received in the contacting chamber, the positioning section there can nestle with its at least one inwardly-facing support surface against the connection member so that the touch protection cover can be positioned precisely with respect to the connection member. In other words, the positioning section helps to position the connection member correctly within the protective collar.

In particular, this results in more precise positioning as compared to conventional touch protection covers, for which the current conductor and not the connection member serves as a reference point. Any dimensional and positional tolerances between the current conductor and the connection member, which influence the positioning of conventional touch protection covers, therefore advantageously have no effect on the touch protection cover according to the invention.

The solution according to the invention can be further improved with the following independent and individually advantageous configurations and further developments.

According to a first possible embodiment, at least one surface of the touch protection cover, in particular the at least one support surface, can be configured to abut against the connection member. For example, at least one surface of the touch protection cover, in particular the at least one support surface, can define an inner contour that corresponds at least sectionally to an outer contour of the connection member. In this manner, precise abutment of the at least one support surface against the connection member can be ensured in a simple manner. In particular, at least one surface of the touch protection cover, for example, the at least one support surface, can be configured to abut with precise fit against the connection member, which further increases the positioning accuracy of the touch protection cover.

If the outer contour of the connection member is circular, the positioning section can also serve as a centering section. In other words, at least one surface of the touch protection cover, in particular the at least one support surface, can have a corresponding inner contour so that the positioning section ensures the centering of the touch protection cover with respect to the connection member with a circular outer contour. For example, the positioning section can create a constriction in the contacting chamber with which the connection member is concentrically positioned when in the mounted state. The positioning section can there narrow the contacting chamber in steps or continuously.

According to a further possible embodiment, the positioning section can adjoin the housing section. In particular, the positioning section and the housing section can be connected. This connection can be integral, monolithic or material-bonded. The touch protection cover is therefore advantageously an integral single-part component. Alternatively, the touch protection cover can also be configured to be multi-part.

In both the single-part and the multi-part embodiment of the touch protection cover, the positioning section can project from the housing section. In particular, the positioning section can be formed by a continuous inner flange that projects from the protective collar into the contacting chamber. Alternatively, the positioning section can be formed by at least three separate positioning projections, each of which projects from the protective collar. The positioning section or its positioning projections, respectively, can there project into the contacting chamber. Furthermore, the positioning projections can each comprise a support surface and/or be at a regular angular distance from one another. By using at least three positioning projections, a unique stability position can be defined, like with a tripod.

Optionally, the positioning section can be formed by an even number of positioning projections. The positioning projections are preferably disposed in pairs opposite each other with respect to the contacting chamber. The resulting two-sided abutment against the connection member increases the stability of the touch protection cover when in the mounted state.

To improve the touch protection function, the protective collar of the housing section can extend over the connection member when in the mounted state. In addition, the protective collar can be configured to be self-contained, continuous, and all-round. For example, the protective collar can be configured to be sleeve-shaped, in particular circular-cylindrical. An inner diameter of the protective collar can there preferably be greater than or equal to an outer diameter of a protective housing of the mating member of the interface. When connecting the interface to the mating member, the protective collar can receive the protective housing at least in part.

In order to provide space in the contacting chamber for the protective housing of its mating member in addition to the received connection member of the interface, the protective collar can be spaced from the connection member by a spacing gap. This means that the spacing gap between the protective collar and the connection member of the interface is configured to receive the protective housing of the mating member at least in part.

The connection member can be a battery terminal or a pole terminal. For example, the connection member can comprise a contact ring that serves as an electrical current bridge. As already indicated at the outset, the connection member can also comprise a fastening element, such as a bayonet element, a bolt, a pin, a clamp, a rivet, a threaded sleeve, a screw or a screw nut. The contact ring can receive the fastening element at least in part.

The contact ring can be formed to be cylindrical and have a planar face surface on which a connection member of the mating member, also configured as a contact ring, can be contacted. This contacting preferably takes place in the contacting chamber. In other words, the protective collar can be configured to surround at least in part the region in which the connection members of the interface and the mating member contact each other. Accordingly, the contacting chamber is also configured to receive the connection member of the mating member at least in part in addition to the connection member of the interface and the protective housing of the mating member.

Each connection member can be arranged at one end or between two ends of a respective current conductor of the module connector. The current conductors can be, for example, flat conductors, busbars, current strips or cables. The current conductors each lead to different modules which are to be connected to one another by way of the module connector and its connection members. For example, the contact ring can be pressed into a receiving opening of the associated current conductor. A press fit between the contact ring and the current conductor is preferably reinforced by the fastening element received in the contact ring being pressed thereinto.

As a measure to increase stability, the housing section and the positioning section can also jointly form a bearing surface for the current conductor of the module connector which is configured as a flat conductor, busbar or current strip. In particular, the housing section and the centering section can run flush with one another in the region of the bearing surface. In addition, the bearing surface can run parallel to a main plane of the flat conductor. The touch protection cover can then rest with the bearing surface upon an upper side of the flat conductor.

In order to simplify mounting the touch protection cover onto the connection member as described above, the contacting chamber can extend in a plugging direction along which the interface is also connectable to the complementary mating member of the module connector. Since the at least one support surface faces inwardly with respect to the contacting chamber, the positioning section, when mounted thereonto, can provide a slide surface or guide surface with its at least one support surface on which the touch protection cover is moved relative to the connection member.

In addition to mounting the touch protection cover, its fastening is also a step that often ties up resources. With conventional touch protection covers, multi-part designs and/or special tools are used for this purpose. In a further possible embodiment, the touch protection cover according to the invention can instead be configured to form a latching form-fit connection with the current conductor of the module connector. In particular, the housing section can form at least one latching hook that comprises a latching projection and a latching arm that carries the latching projection.

The latching projection preferably has a hook surface that faces the protective collar and thereby creates an undercut or a back draft. A distance measured in the plugging direction between the bearing surface already described and the hook surface corresponds as closely as possible to the material thickness of the current conductor. This means that the current conductor configured, for example, as a flat conductor can be held in a form-fit manner between the bearing surface and the hook surface. The latching arm can extend transversely, in particular perpendicularly to the positioning section and/or project from the bearing surface.

The latching arm must be sized according to the length required for this. In addition, the latching arm stands on the protective collar, is self-supporting and in particular is configured to be more flexible than the remainder of the housing section.

The touch protection cover can first be hooked in at the end of the current conductor with a projecting L-shaped edge of the housing section and then engage in the latching form-fit connection by way of the at least one latching hook. Optionally, the housing section can also form at least two latching hooks, wherein the latching hooks are disposed opposite each other with respect to the contacting chamber. The latching projections can be directed towards or away from each other. This means that the latching projections face inwardly or outwardly with respect to the contacting chamber. According to a particularly compact embodiment, the latching projections of the latching hooks can also take on the function of the positioning projections. In other words, in addition to the hook surface facing towards the protective collar, the latching projections can also provide a support surface facing into the contacting chamber.

For the latching form-fit connection, the latching hooks can engage around the current conductor from the outside. In addition to the receiving opening already mentioned, the current conductor can alternatively have secondary holes parallel thereto. The latching hooks can then be individually inserted into the secondary holes. The secondary holes are sized accordingly for the latching projection to be passed through.

The current conductor can comprise a secondary hole for each latching hook. Optionally, more secondary holes than latching hooks can also be provided in the current conductor. In this case, the housing section can form at least one coding pin that extends transversely, in particular perpendicularly to the positioning section. The at least one coding pin serves to define a predetermined orientation of the touch protection cover with respect to the current conductor. The coding pin can then project from the bearing surface. Preferably, the coding pin and the latching hook can extend parallel to one another. The coding pin ensures that the touch protection cover with the bearing surface can rest on the current conductor only when the touch protection cover has the predetermined orientation in which the coding pin coincides with the associated secondary hole. Incorrect assembly of the touch protection cover can thus be prevented.

The object mentioned at the outset is also achieved by an interface for a module connector with a touch protection cover according to one of the above embodiments and an electrically conductive connection member of the module connector, wherein the protective collar of the touch protection cover is spaced from the connection member by a spacing gap, and wherein the positioning section bridges this spacing gap and abuts against the connection member so that the spacing gap has a constant width throughout an inner circumference of the contacting chamber.

The interface benefits from the advantages of the touch protection cover already explained. In particular, the positioning section prevents the touch protection cover from being offset sideways, which would cause the width of the gap to become unacceptably large on one side. In the case of a rotationally symmetrical connection member, the positioning section ensures that the touch protection cover is arranged centered with respect to the connection member. In other words, the positioning section then serves as a centering section.

Optionally, an electrically insulating protective cap can be mounted onto one end of the threaded sleeve or the screw of the connection member. The protective cap, together with the protective collar, can selectively limit the accessibility of the contact ring.

A module connector with the interface just described and a complementary mating member that is configured to be connectable to the interface along the plugging direction also achieves the object stated at the outset if the mating member comprises a protective housing and the gap between the protective collar and the connection member of the interface is configured to receive at least in part the protective housing of the mating member.

The touch protection cover and the protective housing can therefore jointly fulfill the touch protection function and ensure the electrical safety of the module connector.

The module connector can comprise the current conductor configured as a flat conductor with the aforementioned receiving opening in which the connection member of the interface is attached. In addition, the touch protection cover can have the latching form-fit connection to the flat conductor described above. In particular, the flat conductor can comprise the secondary hole or secondary holes through which the touch protection cover in the form of the latching hooks and/or the coding pin extends at least sectionally.

To make handling the module connector easier, the touch protection cover of the interface can be configured to enter into a pre-latching state with the protective housing of the mating member. For this purpose, complementary pre-latching elements can be provided on the touch protection cover or the protective housing, respectively. The tensile force required to release the pre-latching state should be smaller than the pull-off force required to release the latching form-fit connection so that the touch protection cover together with the protective housing cannot be accidentally pulled off the interface. The two forces mentioned are to be understood as acting parallel to the plugging direction.

According to an advantageous embodiment, it is sufficient for the mounting of the touch protection cover that the flat conductor be accessible only from its previously mentioned upper side if the touch protection cover can be installed in the module connector by way of a blind installation. Access to the flat conductor from an underside disposed opposite the upper side is then not necessary. In other words, the touch protection cover according to this embodiment can be mounted onto the connection member from the upper side of the flat conductor and pressed thereonto in order to establish the latching form-fit connection. For this purpose, the latching hooks preferably each comprise an insertion bevel which makes it easier to insert the latching hooks through the secondary holes. This additionally ensures compatibility with an automatic placement machine (e.g. pick-and-place robot).

The invention shall be explained hereafter in more detail with reference to the drawings on the basis of several exemplary embodiments, the different features of which may be combined with one another as required in accordance with the above observations. In particular, individual features can be added to the embodiments described in accordance with the above explanations if the effect of these features is necessary for a specific case of application. Conversely, individual features can be omitted from the existing embodiments if the technical effect of these features is not important in a specific case of application. Similar, identical, and functionally identical elements in the drawings are provided with the same reference numerals to the extent as appropriate,
where:
- Fig. 1: shows a schematic perspective view of an exemplary embodiment of a module connector in an exploded view;
- Fig. 2: shows a schematic perspective view of an exemplary embodiment of an interface of the module connector;
- Fig. 3: shows a further schematic perspective view of the interface from Figure 2 in a sectional view;
- Fig. 4: shows a schematic perspective view of an exemplary embodiment of a touch protection cover;
- Fig. 5: shows a schematic plan view of the touch protection cover from Figure 4;
- Fig. 6: shows a schematic perspective view of the interface according to a further exemplary embodiment in a sectional view;
- Fig. 7: shows a schematic side view of the interface from Figure 6 in a further sectional view;
- Fig. 8: shows a schematic side view of the interface according to a further exemplary embodiment in a sectional view and
- Fig. 9: shows a schematic side view of the interface according to a further exemplary embodiment in a sectional view.

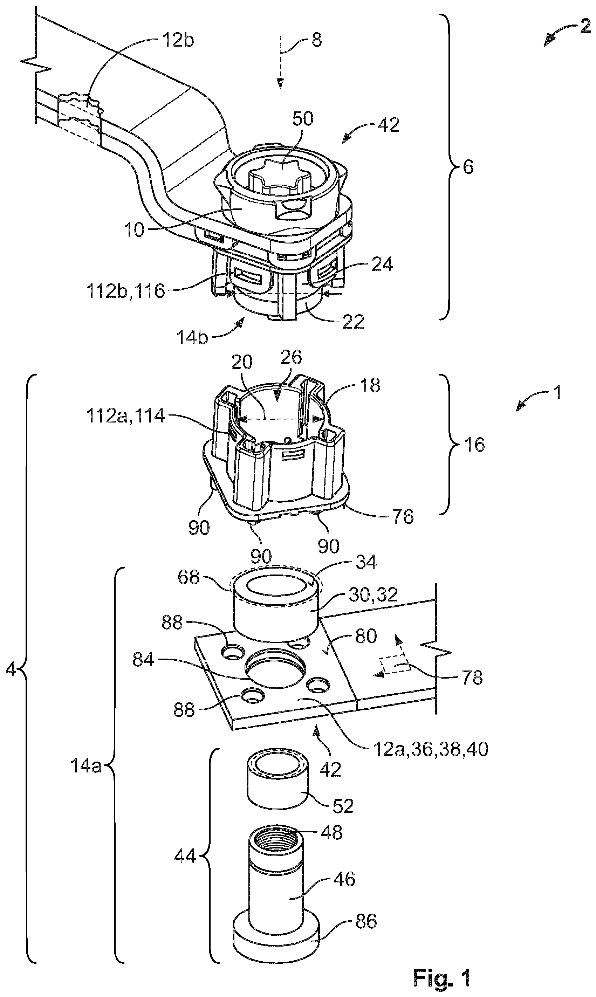

Figure 1 shows an exemplary embodiment of an electrically insulating touch protection cover 1 for an electrical module connector 2. Touch protection cover 1 is part of an interface 4 of module connector 2. In addition to interface 4, module connector 2 contains a complementary mating member6 which is configured to be connectable to interface 4 along a plugging direction 8. Mating member 6 comprises a protective housing 10 which can be plugged together with touch protection cover 1 of interface 4 along plugging direction 8.

When interface 4 and mating member 6 are in the connected state (not shown), an electrically conductive current path extends through module connector 2. Module connector 2 can therefore be employed, for example, in a battery system (not shown) of an electric vehicle or another type of energy system for power transmission.

As can be seen from Figure 1, module connector 2 comprises two current conductors 12a, 12b, which can be connected to one another by way of electrically conductive connection members 14a, 14b. One current conductor 12a and one connection member 14a each belong to interface 4. The other current conductor 12b and the other connection member 14b are disposed on mating member 6 of interface 4. Touch protection cover 1 and protective housing 10 serve to prevent unintentional contact with respective connection members 14a, 14b, as shall be explained in more detail below.

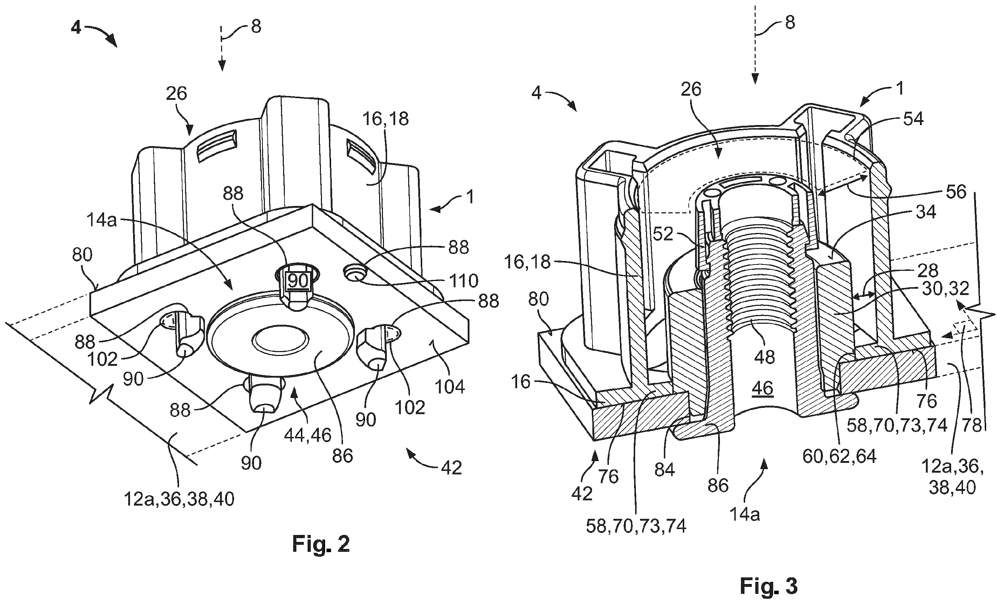

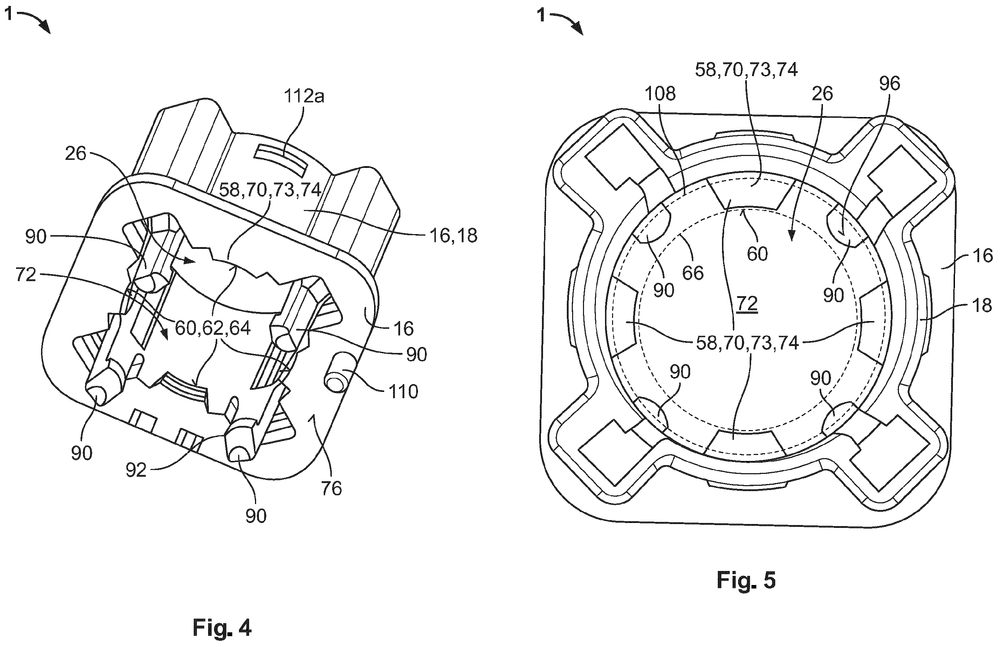

Touch protection cover 1 comprises a housing section 16 which forms a protective collar 18 for connection member 14a. Protective collar 18 of housing section 16 extends over connection member 14a (see Figure 3). As can be clearly seen in Figure 5, protective collar 18 can be configured to be self-contained, continuous, and all-round. In the example shown, protective collar 18 is configured to be sleeve-shaped, in particular circular-cylindrical. An inner diameter 20 of protective collar 18 is preferably greater than or equal to an outer diameter 22 of a housing collar 24 at protective housing 10. When connecting interface 4 to mating member 6, protective collar 18 can accordingly receive housing collar 24 coaxially.

Receiving housing collar 24 takes place in a contacting chamber 26 of touch protection cover 1 surrounded by protective collar 18. In other words, contacting chamber 26 extends in plugging direction 8 through housing section 16 and is accessible to housing collar 24. Contacting chamber 26 is simultaneously configured to receive connection member 14a at least in part. For this purpose, protective collar 18 is spaced from received connection member 14a by a spacing gap 28 (see Figure 3). Housing collar 24 of protective housing 10 is accordingly accommodated in spacing gap 28. This means that spacing gap 28 between protective collar 18 and connection member 14a of interface 4 is configured to receive protective housing 10 of mating member 6 at least in part.

The previously mentioned reception of connection member 14a in contacting chamber 26 then takes place when touch protection cover 1 is mounted onto the remainder of interface 4. In other words, touch protection cover 1 together with its contacting chamber 26 is mounted onto interface 4 and its connection member 14a.

Connection member 14a of interface 4 can be a current bridge 30, such as a cylindrical contact ring 32. Contact ring 32 comprises a planar face surface 34 to which connection member 14b of mating member 6, that is likewise configured as a contact ring (not shown), can be contacted. This contacting preferably takes place in contacting chamber 26. In other words, protective collar 18 is configured to surround at least in part the region in which connection members 14a, 14b of interface 4 and of mating member 6 contact each other. Accordingly, contacting chamber 26 is also configured to receive connection member 14b at least in part.

Protective housing 10 can comprise an inner cavity in which connection member 14b and current conductor 12b can be received at least sectionally. Furthermore, protective housing 10 can be constructed to be two-part in order to simplify the reception of connection member 14b and current conductor 12b. However, protective housings 10 configured to be single-part are also possible.

Current conductors 12a, 12b are, for example, flat conductors 36, busbars 38, current strips 40 or cables that are installed in the battery system. Two or more electrical modules (not shown) of the battery system can then be connected to one another by way of current conductors 12a, 12b and connection members 14a, 14b. The electrical modules can be battery modules, control units, or current converters, respectively, of the battery system.

Each connection member 14a, 14b is arranged at one end 42 or between two ends of respective current conductor 12a, 12b. Furthermore, each connection member 14a, 14b comprises a fastening element 44, for example, a fastening element 44 for a screw connection. For example, connection member 14a of interface 4 comprises a threaded sleeve 46 with an internal thread 48 and the other connection member 14b comprises a matching screw 50 with an external thread.

Optionally, an electrically insulating protective cap 52 can be mounted onto one end of threaded sleeve 46. Similarly, screw 50 can also carry a protective cap (not shown) at one end. Protective cap 52, together with protective collar 18, can specifically limit the accessibility of connection member 14a. Contacting chamber 26 and connection member 14a there are accessible only by way of an annular access slot 54 which extends between protective collar 18 and protective cap 52 and opens into spacing gap 28 (see Figure 3).

Width 56 of access slot 54 depends on the desired/prescribed protection class (e.g. IPXXB) that is to be achieved with touch protection cover 1. The protection class can be verified using a standardized test finger (not shown) that simulates a user's finger. The more smaller test fingers are prevented from penetrating access slot 54 from all sides, the better/higher the protection class. The standard DIN EN 60529:2000, for example, specifies a length of 80 mm and a diameter of 12 mm for the test finger. Other relevant standards can be: VDE 0470 part 1 or part 2, IEC/EN 60034-5, IEC/EN 60065, IEC/EN 60335, IEC/EN 60529, IEC/EN 60745-1, IEC/EN 60950, IEC 61010 and IEC/EN 61032.

Since access slot 54 is defined by protective collar 18 and protective cap 52, its width 56 is locally dependent upon the relative position between protective collar 18 and protective cap 52. If touch protection cover 1 is offset laterally, access slot 54 can have an impermissibly large width 56 on one side. To prevent this, it is advantageous to position touch protection cover 1 precisely when mounting it onto connection member 14a.

For this purpose, touch protection cover 1 comprises a positioning section 58 which extends at least in part within contacting chamber 26 and adjoins, for example, housing section 16. As can be seen in Figure 4, positioning section 58 comprises at least one support surface 60, slide surface 62, or guide surface 64, respectively, which is offset from protective collar 18 and faces inwardly with respect to contacting chamber 26. In other words, positioning section 58 can project from housing section 16 into the interior of contacting chamber 26. Positioning section 58 and housing section 16 can there be connected, in particular integrally, monolithically or in a material-bonded manner. In a touch protection cover 1 produced as an injection-molded member made of plastic material, the integrally formed monolithic connection can be implemented in a simple manner.

At least one support surface 60 is configured to abut, in particular to abut with precise fit, against connection member 14a (see Figure 3). For example, at least one support surface 60 can define an inner contour 66 (see Figure 5) which corresponds at least sectionally to an outer contour 68 of connection member 14a (see Figure 1). When connection member 14a is received in contacting chamber 26, positioning section 58 nestles with its at least one support surface 60 against connection member 14a so that connection member 14a can be used directly as a reference point for positioning.

If the inner contour 66 and outer contour 68 each have a rotational symmetry, then positioning section 58 can also function as a centering section 70. This results in more precise centering of touch protection cover 1 as compared to conventional touch protection covers (not shown) for which current conductor 12a serves as a reference point for centering. Any dimensional and positional tolerances between current conductor 12a and connection member 14a, which influence the centering of conventional touch protection covers, therefore have no effect on touch protection cover 1 according to the invention, or at least have a lesser effect.

It can be seen in Figure 3 that centering section 70 bridges above-mentioned spacing gap 28 in order to abut with precise fit against connection member 14a. Furthermore, centering section 70 can create a constriction 72 in contacting chamber 26 which is preferably concentric with contacting chamber 26 (see Figure 5). In particular, centering section 70 can narrow contacting chamber 26 in steps or continuously so that connection member 14a is received in contacting chamber 26 with as little play as possible. This allows for the centered arrangement of touch protection cover 1 already mentioned with respect to connection member 14a.

Optionally, positioning section 58 can be formed by at least three positioning projections 73. Accordingly, positioning section 58 serving as centering section 70 can be formed by at least three centering projections 74. Positioning projections 73 or centering projections 74 can each project from protective collar 18 as ring segments and/or partial flanges, in particular project into contacting chamber 26. Positioning projections 73 or centering projections 74 can be arranged evenly distributed over protective collar 18 and can have a uniform angular distance from one another in pairs. In addition, each of positioning projections 73 or centering projections 74 can comprise a support surface 60 so that the entirety of positioning projections 73 or centering projections 74 defines aforementioned inner contour 66.

Optionally, positioning section 58 can be formed by an even number of positioning projections 73. Likewise, positioning section 58 serving as centering section 70 can be formed by an even number of centering projections 74, wherein centering projections 74 can then be arranged opposite one another in pairs with respect to contacting chamber 26. In the exemplary embodiment in Figure 5, four centering projections 74 are then provided which are arranged opposite one another left and right and up and down in the plane of the drawing. According to an alternative embodiment not shown, centering section 70 can be formed by a continuous inner flange or full flange that projects from protective collar 18 into contacting chamber 26.

For touch protection cover 1 to have a stable seat on flat conductor 36 of module connector 2, housing section 16 and positioning section 58, in particular centering section 70, can together form a bearing surface 76 for a flat conductor 36. Furthermore, housing section 16 and positioning section 58 or centering section 70, respectively, can run flush with one another in the region of bearing surface 76 (see Figure 3). In addition, bearing surface 76 can run parallel to a main plane 78 of flat conductor 36. Touch protection cover 1 can then rest with bearing surface 76 upon an upper side 80 of flat conductor 36.

As can be seen in the sectional view of Figure 3, contact ring 32 comprises a shoulder 82 and is pressed into a receiving opening 84 of current conductor 12a. Furthermore, a press fit between contact ring 32 and current conductor 12a is reinforced by the fact that threaded sleeve 46 is pressed into contact ring 32. A flange 86, on one of the other ends of threaded sleeve 46 disposed opposite protective cap 52, together with shoulder 82 of contact ring 32, clamps current conductor 12a so that, in addition to the frictional engagement from the press fit, a form-fit engagement holds connection member 14a in receiving opening 84 of current conductor 12a.

It is evident from Figure 1 that current conductor 12a comprises at least one secondary hole 88 running parallel to receiving opening 84. In particular, receiving opening 84 can be surrounded by multiple such secondary holes 88. Secondary holes 88 serve to attach touch protection cover 1 to current conductor 12a. For the same purpose, touch protection cover 1 can extend at least in part through secondary holes 88. In particular, housing section 16 can form at least one latching hook 90 that comprises a latching projection 92 and a latching arm 94 that carries latching projection 92. At least one latching hook 90 can be inserted into one of secondary holes 88. Secondary holes 88 are preferably sized for latching hook 90, in particular its latching projection 92, to be inserted therethrough.

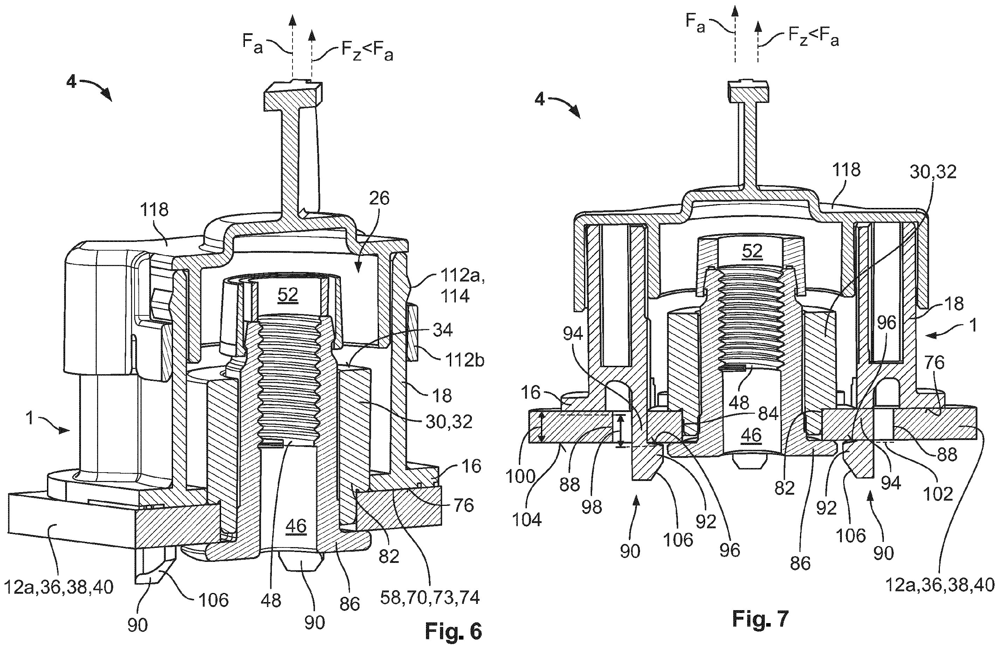

Latching projection 92 preferably comprises a hook surface 96 and is configured to establish a latching form-fit connection with flat conductor 36 of module connector 2 after latching projection 92 has been completely inserted through secondary hole 88. Hook surface 96 can be facing protective collar 18 and create an undercut or a back draft. A distance 98 measured in plugging direction 8 between bearing surface 76 already described and hook surface 96 there corresponds to the extent possible to material thickness 100 of flat conductor 36 (see Figure 7).

Latching arm 94 is to be sized to be accordingly long. In addition, latching arm 94 stans on protective collar 18, is self-supporting, and in particular is configured to be more flexible than the remainder of housing section 16. As shown in Figure 7, latching arm 94 does not fill the entire secondary hole 88 through which its latching projection 92 was inserted. For example, latching arm 94 only fills secondary hole 88 to such an extent that a free cross-sectional area 102 of secondary hole 88 corresponds to hook area 96. If necessary, latching arm 94 can then be deflected in secondary hole 88, hook area 96 can be pulled out from under flat conductor 36, the latching form-fit connection can be removed and finally latching hook 90 can be pulled out of secondary hole 88.

The deflection of latching arm 94 just described and the subsequent steps enable touch protection cover 1 to be removed without causing any damage and could be carried out, for example, as part of maintenance or repair of interface 4. It is advisable there to have latching hook 90 be accessible from an underside 104 of flat conductor 36 opposite upper side 80 already mentioned. For mounting touch protection cover 1, access to underside 104 of flat conductor 36 is not necessary. In particular, touch protection cover 1 can be installed into module connector 2 by way of a blind installation. In other words, it is advantageously sufficient to mount touch protection cover 1 from upper side 80 of flat conductor 36 onto connection member 14a and press it on for establishing the latching form-fit connection. For this purpose, at least one latching hook 90 preferably comprises an insertion bevel 106 which makes it easier to insert latching hook 90 through secondary hole 88 and ensures compatibility with an automatic placement machine (e.g. pick-and-place robot).

As likewise shown in Figure 7, housing section 16 can form at least two latching hooks 90, wherein latching hooks 90 are disposed opposite one another with respect to contacting chamber 26, and wherein their latching projections 92 are directed towards each other. According to an optional embodiment not shown, latching projections 92 of latching hooks 90 can take on or at least support the function of centering projections 74. For this purpose, inwardly directed latching projections 92 can provide not only hook surfaces 96 but also support surface 60 running perpendicularly thereto. Alternatively, latching projections 92 of oppositely disposed latching hooks 90 can be directed away from each other (not shown).

It can be seen in Figures 4 and 5 that touch protection cover 1 shown comprises a total of four latching hooks 90, wherein four centering projections 74 and four latching hooks 90 are distributed alternately over inner circumference 108 of contacting chamber 26. Of course, a differing number or distribution is also possible.

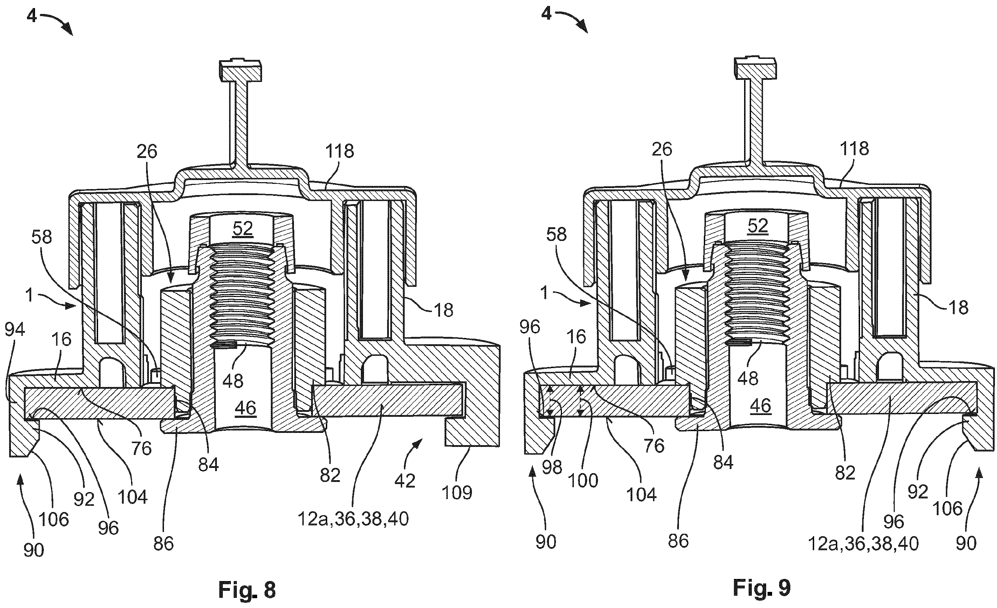

As can be seen in Figure 7, latching hooks 90 can be arranged in plugging direction 8 below protective collar 18. According to the alternative embodiment of Figure 9, latching hooks 90 can also be arranged further outwardly on protective collar 18 and can engage around flat conductor 36 from the outside instead of penetrating through flat conductor 36 in secondary holes 88. In this case, secondary holes 88 in flat conductor 36 could be dispensed with. According to the further alternative embodiment from Figure 8, touch protection cover 1 can first be hooked with a projecting L-shaped edge 109 of housing section 16 into end 42 of current conductor 12a and thereafter enter into the latching form-fit connection by way of a single latching hook 90.

A further possible use for one or more secondary holes 88 is to define a predetermined orientation of touch protection cover 1. In addition or as an alternative to latching hooks 90, housing section 16 can then form at least one coding pin 110 which extends transverse, in particular perpendicular, to centering section 70 (see Figure 4). In addition, coding pin 110 preferably projects from bearing surface 76. If both are present, coding pin 110 and latching hook 90 can extend parallel to one another.

Coding pin 110 ensures that touch protection cover 1 with bearing surface 76 can rest on flat conductor 36 only when touch protection cover 1 has the predetermined orientation in which coding pin 110 coincides with associated secondary hole 88. Incorrect assembly of touch protection cover 1 can thus be prevented.

In order to facilitate handling of fastening elements 44 already mentioned, touch protection cover 1 of interface 4 can be configured to enter into a pre-latching state with protective housing 10 of mating member 6. For this purpose, mutually complementary pre-latching elements 112a, 112b can be provided on touch protection cover 1 or protective housing 10, respectively. In the embodiment shown in Figure 1, the respective pre-latching element 112a is a latching tab 114 that projects radially perpendicular to plugging direction 8 at an outer surface of protective collar 18. The other pre-latching element 112b that is complementary thereto can be a respective latching window 116 formed at protective housing 10.

Interface 4 and its mating member 6 can therefore initially be temporarily affixed by way of the pre-latching, after which final fastening is then carried out by way of fastening elements 44. In this case, a tensile force Fz required to release the pre-latching should be smaller than a pull-off force Fa required to release the latching form-fit connection, so that touch protection cover 1 cannot be accidentally pulled off interface 4 together with protective housing 10. Forces Fz and Fa are each to be understood as acting parallel to plugging direction 8.

In addition to touch protection cover 1, interface 4 can optionally comprise a transport cover 118 which can be mounted onto touch protection cover 1 for the time when not in use and can close contacting chamber 26. Transport cover 118 can comprise pre-latching elements 112b which are configured analogously to latching windows 116 of protective housing 10 and which engage with latching tabs 114 of touch protection cover 1 (see Figure 6). Transport cover 118 then additionally prevents dust and other foreign objects from entering contacting chamber 26.

Any references to norms and standards (e.g. DIN/IEC/EN standards) from this application refer to the version of the respective norm or standard applicable at the time of filing.

### Reference characters

- 1: touch protection cover
- 2: module connector
- 4: interface
- 6: mating member
- 8: plugging direction
- 10: protective housing
- 12a, 12b: current conductor
- 14a, 14b: connection member
- 16: housing section
- 18: protective collar
- 20: inner diameter
- 22: outer diameter
- 24: housing collar
- 26: contacting chamber
- 28: spacing gap
- 30: current bridge
- 32: contact ring
- 34: face surface
- 36: flat conductor
- 38: bus bar
- 40: current strip
- 42: end
- 44: fastening element
- 46: threaded sleeve
- 48: internal thread
- 50: screw
- 52: protective cap
- 54: access slot
- 56: width
- 58: positioning section
- 60: support surface
- 62: slide surface
- 64: guide surface
- 66: inner contour
- 68: outer contour
- 70: centering section
- 72: constriction
- 73: positioning projection
- 74: centering projection
- 76: bearing surface
- 78: main plane
- 80: upper side
- 82: shoulder
- 84: receiving opening
- 86: flange
- 88: secondary hole
- 90: latching hook
- 92: latching projection
- 94: latching arm
- 96: hook surface
- 98: distance
- 100: material thickness
- 102: cross-sectional area
- 104: underside
- 106: insertion bevel
- 108: inner circumference
- 109: edge
- 110: coding pin
- 112a, 112b: pre-latching element
- 114: latching tab
- 116: latching window
- 118: transport cover

- Fa: pull-off force
- Fz: tensile force

## Claims

1. Electrically insulating touch protection cover (1) for a connection member (14a) of an electrical module connector (2) comprising a fastening element (44), said touch protection cover (1) comprising:
- a housing section (16) which forms a protective collar (18) for said connection member (14a),
- a contacting chamber (26) which is surrounded at least in part by said protective collar (18) and which is configured to receive at least in part said connection member (14a), and
- a positioning section (58) for positioning said connection member (14a) relative to said protective collar (18),
wherein said positioning section (58) extends at least in part within said contacting chamber (26), and wherein said positioning section (58) comprises at least one support surface (60) offset from said protective collar (18) and facing inwardly with respect to said contacting chamber (26).

2. Touch protection cover (1) according to claim 1, wherein said at least one support surface (60) defines an inner contour (66) which corresponds at least sectionally to an outer contour (68) of said connection member (14a).

3. Touch protection cover (1) according to claim 1 or 2, wherein said positioning section (58) creates a constriction (72) in said contacting chamber (26).

4. Touch protection cover (1) according to one of claims 1 to 3, wherein said positioning section (58) is formed by at least three positioning projections (73), each of which projects from said protective collar (18).

5. Touch protection cover (1) according to claim 4, wherein said positioning section (58) is formed by an even number of positioning projections (73) and said positioning projections (73) are disposed opposite one another in pairs with respect to said contacting chamber (26).

6. Touch protection cover (1) according to one of claims 1 to 5, wherein said housing section (16) and said positioning section (58) together form a bearing surface (76) for a flat conductor (36) of said module connector (2).

7. Touch protection cover (1) according to one of claims 1 to 6, wherein said housing section (16) forms at least one latching hook (90) that comprises a latching projection (92) and a latching arm (94) that carries said latching projection.

8. Touch protection cover (1) according to claim 7, wherein said housing section (16) forms at least two latching hooks (90), wherein said latching hooks (90) are disposed opposite each other with respect to said contacting chamber (26), and wherein their latching projections (92) face towards or away from each other.

9. Touch protection cover (1) according to one of claims 1 to 8, wherein said housing section (16) forms at least one coding pin (110) which extends transverse to said positioning section (58).

10. Interface (4) for a module connector (2) with a touch protection cover (1) according to one of the claims 1 to 9 and an electrically conductive connection member (14a) of said module connector (2), wherein said protective collar (18) of said touch protection cover (1) is spaced from said connection member (14a) by a spacing gap (28), and wherein said positioning section (58) bridges said spacing gap (28) and abuts against said connection member (14a) so that said spacing gap (28) has a constant width (56) throughout an inner circumference (108) of said contacting chamber (26).

11. Module connector (2) with an interface (4) according to claim 10 and a mating member (6) complementary thereto which is configured to be connectable to said interface (4) along a plugging direction (8), wherein said mating member (6) comprises a protective housing (10) and wherein said spacing gap (28) between said protective collar (18) and said connection member (14a) of said interface (4) is configured to receive at least in part said protective housing (10) of said mating member (6).

12. Module connector (2) according to claim 11, wherein said module connector (2) comprises a flat conductor (36) with a receiving opening (84) in which said connection member (14a) of said interface (4) is attached and wherein said touch protection cover (1) is in a latching connection with said flat conductor (36).

13. Module connector (2) according to claim 12, wherein said touch protection cover (1) of said interface (4) is configured to enter into a pre-latching state with said protective housing (10) of said mating member (6), wherein a tensile force (Fz) required to release said pre-latching state is smaller than a pull-off force (Fa) required to release said latching connection.

14. Module connector (2) according to claim 12 or 13, wherein said flat conductor (36) comprises at least one secondary hole (88) which runs parallel to said receiving opening (84) and through which said touch protection cover (1) extends at least sectionally.

15. Module connector (2) according to one of claims 11 to 14, wherein said touch protection cover (1) is installed in said module connector (2) by way of a blind installation.
